(19) Europäisches Patentamt
European Patent Office
Office européen des brevets

(11) **EP 3 810 910 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **19752636.1**

(22) Anmeldetag: **20.06.2019**

(51) Internationale Patentklassifikation (IPC):
*F02C 6/02* (2006.01)    *F02K 3/12* (2006.01)

(52) Gemeinsame Patentklassifikation (CPC):
**F02K 3/12; F02C 6/02;** F05D 2230/51;
F05D 2230/52; F05D 2240/40; F05D 2250/312;
F05D 2260/606

(86) Internationale Anmeldenummer:
**PCT/CH2019/000019**

(87) Internationale Veröffentlichungsnummer:
**WO 2019/241898 (26.12.2019 Gazette 2019/52)**

(54) **GASTURBINE UND EIN VERFAHREN ZUM BETREIBEN EINER GASTURBINE**

GAS TURBINE AND METHOD FOR OPERATING A GAS TURBINE

TURBINE A GAZ ET PROCÉDÉ D'UTILISATION D'UNE TURBINE À GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2018 CH 7922018**

(43) Veröffentlichungstag der Anmeldung:
**28.04.2021 Patentblatt 2021/17**

(73) Patentinhaber: ENVITA Management & Development GmbH
**5405 Baden-Dättwil (CH)**

(72) Erfinder: **SUNKLER, Rupert**
**5405 Baden-Dättwil (CH)**

(74) Vertreter: **Dittmann, Rolf**
**Freigutpartners Baden AG**
**Hahnrainweg 4**
**5400 Baden (CH)**

(56) Entgegenhaltungen:
**GB-A- 629 920**          **US-A- 2 621 475**
**US-A- 5 743 081**          **US-A1- 2013 111 923**
**US-A1- 2015 135 725**

## Beschreibung

### Gebiet der Erfindung:

Die hierin offenbarte Erfindung betrifft eine Gasturbine und ein Verfahren zum Betreiben einer Gasturbine.

### Beschreibung des relevanten Standes der Technik und Aufgabe der Erfindung:

Gasturbinen werden verwendet, um elektrische Energie für Elektrizitätsversorgungsunternehmen und Industrie zu erzeugen. Es ist wichtig, dass Gasturbinen mit hohem Wirkungsgrad arbeiten.

Das Prinzip der Wirkungsgraderhöhung von stationären Gasturbinen mittels Erhöhung des Druckverhältnisses in einer Oberstufe ist bekannt. Schon vor vielen Jahrzehnten wurde dieses angewendet. Beispielsweise von BBC Brown Boveri in den 1950-er Jahren bei den Gasturbinen Typ 12/8 mit sequenzieller Verbrennung.

Die Parallelschaltung mehrerer Obergruppen, für Flugtriebwerke, wurde bereits 1945 wurde von Frank Whittle beschrieben. Siehe Patent US 2,601,194. Eine weitere Gasturbine entsprechend dem Stand der Technik offenbart das Dokument US5743081 A.

Bei der Entwicklung neuer stationärer Gasturbinenmodelle strebt man ein hohes Druckverhältnis an. Dabei stellt sich das Problem, dass die sehr kleinen Schaufelspiele, die zur Erreichung hoher Kompressordrücke und damit hoher Kompressor- und Turbinenwirkungsgrade nötig sind, schwierig zu realisieren sind. Dies, weil Kompressor und Turbine normalerweise koaxial angeordnet und daher die physischen Dimensionen und die Drehzahlen vorgegeben sind. Benötigt wird also eine Gasturbine, deren Hochdruckkompressorstufen und Hochdruckturbinenstufen Dimensionen, Drehzahlen und Schaufelspiele erlauben, die für hohe Drücke optimal sind. Die hier vorgestellte Erfindung präsentiert eine solche Gasturbine.

Des Weiteren ist bisher keine Nachrüstungs-Methode bekannt, mittels welcher es möglich wäre, das Druckverhältnis an bestehenden stationären Gasturbinen wesentlich zu erhöhen, ohne Änderungen am bestehenden Kompressor bzw. an der Turbine vornehmen zu müssen. Die vorliegende Erfindung macht dies möglich.

### Kurzbeschreibung der Erfindung:

Stationäre Gasturbinen bestehen üblicherweise aus drei Komponenten, dem Kompressor, dem Gaserwärmer beispielsweise in Form einer oder mehrerer Brennkammern, und der Turbine. Kompressor und Turbine sind normalerweise koaxial bzw. auf derselben Welle angeordnet und treiben üblicherweise einen Generator an. Üblicherweise - und in dieser Patentschrift beispielhaft verwendet - ist das Prozessfluid Luft. Anstelle von Luft können aber auch andere Prozessfluide eingesetzt werden.

Ziel der hier beschriebenen Erfindung ist, einen hohen Wirkungsgrad der Gasturbine zu erreichen, bzw. deren Wirkungsgrad und Nutzleistung zu erhöhen. Die hier vorgestellte Gasturbine 1 löst diese Aufgabe, indem der Massenstrom zwischen Kompressoraustritt und Turbineneintritt in zwei oder mehrere parallele Teilströme aufgeteilt und der thermodynamische Prozess dieser Teilströme gegen einen höheren Druck angehoben wird. Dazu werden zwischen Niederdruckkompressor 2 und Niederdruck-Entspannungsturbine 4, welche nun als Unterstufe bezeichnet werden, weitere Gasturbinen angeordnet, welche für den Betrieb auf hohem Druckniveau ausgelegt sind. Mit der Druckerhöhung geht nach den Gesetzen der Thermodynamik eine Erhöhung des Wirkungsgrades einher.

Im Folgenden werden diese Hochdruck-Gasturbinen, jede bestehend aus Kompressor, Verbrennungsraum und Entspannungsturbine, einzeln als Oberstufen bezeichnet, obwohl alle zusammen wie eine gemeinsame Oberstufe wirken.

Die Achsen der Oberstufen können im Raum frei positioniert werden (müssen also nicht parallel zu oder identisch mit der Achse der Unterstufe sein) und können demzufolge optimal an die physischen Gegebenheiten der Unterstufe angepasst werden.

Neben den Teilströmen, die, wie oben beschrieben, durch die Oberstufen geführt werden, sind - als integraler Teil der Erfindung - Bypass-Ströme vorgesehen, welche die Oberstufen umgehen und den Austritt des Niederdruckkompressors 2 mit dem Eintritt der Niederdruck-Entspannungsturbine 4 in direkter Fluidverbindung verbinden. Die Durchflussmengen durch diese Bypässe werden durch entsprechende Regelsysteme *und* Stellorgane (Ventile, Schieber oder ähnliches) so geregelt, dass die Summe der Luft-Massenströme durch Oberstufen und Bypässen immer dem erforderlichen Wert entspricht, der durch die Kennlinie des Niederdruckkompressors 2 vorgegeben ist. Dies stellt sicher, dass der Niederdruckkompressor immer im stabilen Strömungsbereich läuft, auch wenn die Summe der Luft-Massenströme, die durch die Oberstufen gehen, reduziert ist, beispielsweise im Leerlauf, bei Teillast, beim Starten oder beim Abstellen der Anlage.

Gegensand des Hauptpatentanspruchs (Patentanspruch 1) umfasst eine Kombination von zwei oder mehreren im Raum frei positionierten Oberstufen mit einem oder mehreren geregelten Luft-Bypass-Teilströmen, wie oben beschrieben.

Diese neue Kombination kann für die Entwicklung und Konstruktion neuer stationärer Gasturbinen angewendet werden. In diesen Fällen ist eine Leistungsauskoppelung aus den Oberstufen nicht unbedingt erforderlich, weil die Verdichtungsverhältnisse auf Unterstufe und Oberstufe passend verteilt werden können.

Diese neue Kombination kann auch angewendet werden für die Nachrüstung bestehender stationärer Gasturbinen, wobei in diesen Fällen - sofern Niederdruckkompressor und Niederdruck-Entspannungsturbine unverändert bleiben - eine Auskoppelung von mechanischer Leistung aus den Oberstufen vorgesehen ist.

***Detaillierte Beschreibung der Erfindung:***

Die vorstehend genannten sowie weitere Merkmale und Vorteile der Erfindung sind aus der folgenden detaillierten Beschreibung in Verbindung mit den beiliegenden Zeichnungen ersichtlich.

Die Zeichnungen sind stark schematisiert. Nicht für das Verständnis der beschriebenen Gegenstände notwendige Einzelheiten sind weggelassen worden. Weiterhin zeigen die Zeichnungen nur ausgewählte Ausführungsbeispiele und dürfen nicht zur Einschränkung der in den Ansprüchen beschriebenen Gegenstände herangezogen werden.

"Ein" oder "eine" sind im Rahmen der vorliegenden Beschreibung als unbestimmte Artikel und nicht als Zahlwort zu verstehen, sofern nicht explizit auf eine andere Bedeutung, beispielsweise durch die Verwendung von "genau ein" oder "genau eine" hingewiesen wird.

FIG. 1

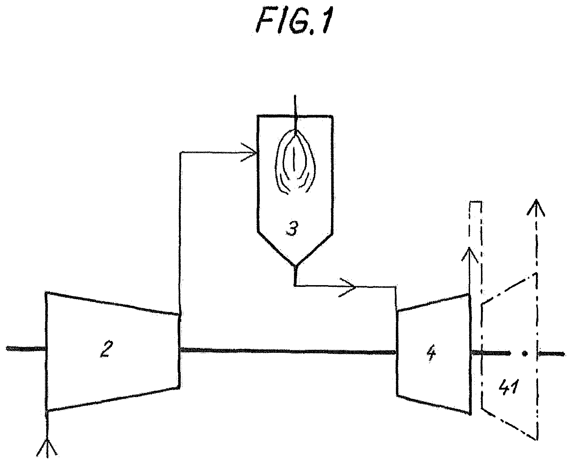

Die hier vorgestellte Erfindung wird an stationären Gasturbinen angewendet, wie sie FIG. 1 darstellt. FIG. 1 veranschaulicht ein Beispiel eines thermischen Schemas einer klassischen stationären Gasturbine, bestehend aus drei Komponenten: dem Kompressor 2, dem Gaserwärmer 3 und der Niederdruck-Entspannungsturbine 4. Als Gaserwärmer sind beispielsweise eine oder mehrere Brennkammern zu verstehen. Kompressor und Niederdruck-Entspannungsturbine sind koaxial angeordnet und treiben über eine Kupplung üblicherweise einen Generator an. Der Generator kann auf der Kompressoreintrittsseite oder auf der Gasturbinenabgasseite angeordnet werden. Klassische Gasturbinen dieser Art werden nicht nur für direkten Generatorantrieb verwendet, sondern auch im Industriebetrieb beispielsweise für den Antrieb von Pumpen oder Kompressoren eingesetzt. Dafür werden sie auch als sogenannte Split-Shaft-Maschinen ausgeführt. Die üblicherweise koaxial angeordnete freie Powerturbine 41 (strich-punktiert gezeichnet) ist dabei nicht mit dem Kompressor 2 und der Niederdruck-Entspannungsturbine 4 fest gekuppelt, sondern über eine separate Kupplung mit der angetriebenen Maschine, beispielsweise einem Generator, einer Pumpe oder einem Gebläse. Die separate Kupplung und die angetriebene Maschine sind der Einfachheit halber in FIG. 1 nicht gezeichnet.

FIG. 2

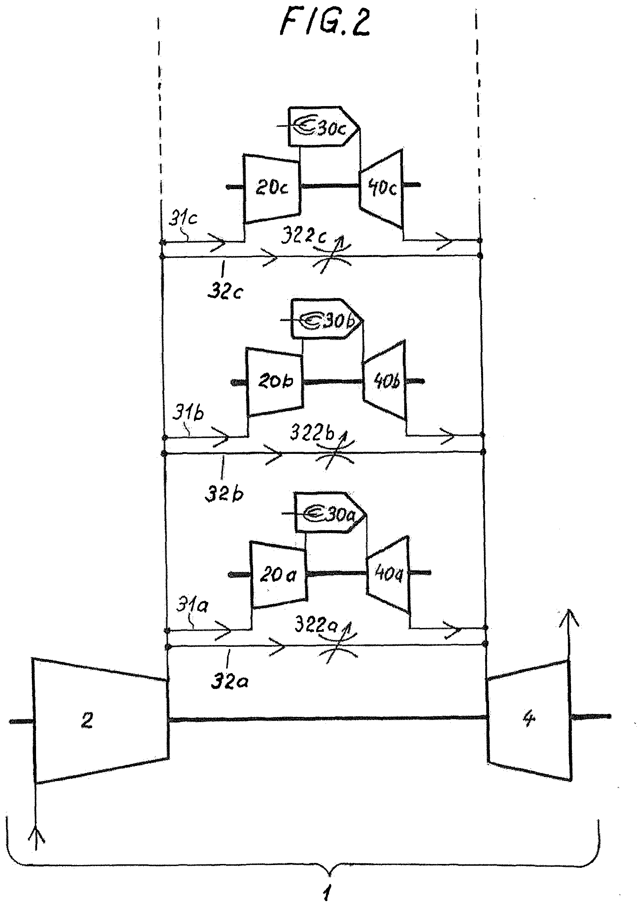

Für die Realisierung der in dieser Patentanmeldung dargestellten Gasturbine 1 wird, wie in FIG. 2 schematisch dargestellt, zwischen Niederdruckkompressor 2 und Niederdruck-Entspannungsturbine 4, welche nun als Unterstufe bezeichnet werden, eine weitere Gasturbinenanordnung, umfassend zwei oder mehrere kleinere Hochdruck-Gasturbinen angeordnet. Jede einzelne dieser Hochdruck-Gasturbinen wird im Folgenden als Oberstufe bezeichnet, jede Oberstufe bestehend aus Kompressor, Gaserwärmer und Hochdruck-Entspannungsturbine. Die Oberstufen sind für den Betrieb auf hohem Druckniveau ausgelegt.

Der thermische Wirkungsgrad des Joule Kreisprozesses (idealer Gasturbinen-Vergleichsprozess) ist vom Druckverhältnis $\pi$ (Pi) abhängig. Gemäss folgender Formel:

$$\eta_{th} = 1 - \frac{1}{\pi^{\frac{\kappa-1}{\kappa}}}$$

Nach den Gesetzen der Thermodynamik geht also mit einer Erhöhung des Druckverhältnisses eine Erhöhung des Wirkungsgrades der Gasturbine einher.

In FIG. 2 sind, als Beispiel, drei Oberstufen zeichnerisch erfasst. (20a/30a/40a, 20b/30b/40b und 20c/30c/40c.) Die einzelnen Oberstufen können gleich gross oder unterschiedlich gross sein. Die Anzahl Oberstufen ist zwei oder mehr. Die Anzahl Oberstufen wird optimal gewählt je nach den thermodynamischen Bedingungen der Anlage und deren physischen Gegebenheiten.

Neben den Luft-Teilströmen die durch die Oberstufen geführt werden, sind - als integraler Teil der hier vorgestellten Erfindung - Bypass-Ströme 32a, 32b, 32c vorgesehen, welche die Oberstufen umgehen und den Austritt des Niederdruckkompressors 2 mit dem Eintritt der Niederdruck-Entspannungsturbine 4 in direkter Fluidverbindung verbinden. Diese Teilströme werden durch entsprechende Regelsysteme und Stellorgane (Ventile, Schieber oder ähnliches) jeweils so geregelt, dass der gesamte Luft-Massenstrom, der durch Oberstufen und Bypässe strömt, immer dem erforderlichen Wert entspricht, der durch die Kennlinie des Niederdruckkompressors 2 vorgegeben ist. In FIG 2 sind die Stellorgane beispielhaft als Details 322a, 322b, 322c gezeichnet. Die geregelten Bypass-Ströme stellen also sicher, dass der Niederdruckkompressor immer im stabilen Strömungsbereich läuft, auch wenn die Summe der Luft-Massenströme, die durch die Oberstufen gehen reduziert ist, beispielsweise im Leerlauf, bei Teillast, beim Starten oder beim Abstellen der Anlage. Die Anzahl Bypassströme muss mit der Anzahl Oberstufen nicht identisch sein. Möglich ist auch eine Ausführung mit nur genau einem Bypass.

Der Luft-Massenstrom der Unterstufe wird auf die einzelnen Oberstufen und die Bypassströme verteilt. Die Summe der Luft-Massenströme, die durch die Oberstufen und die Bypässe strömen, ist immer gleich gross wie der Luft-Massenstrom, der durch den Kompressor der Unterstufe strömt. Die Oberstufen können so ausgelegt werden, dass bei einem gewählten Betriebspunkt, z.B. bei Volllastbetrieb, die Bypass-Stellorgane geschlossen sind. Die Verteilung der Massenströme auf die einzelnen Oberstufen kann in gleichem Verhältnis, oder auch in unterschiedlichem Verhältnis, je nach Gestaltung der Gesamtanlage festgelegt werden. Auch die Belastung der Oberstufen kann im Betrieb durch das Regelsystem je Oberstufe unterschiedlich eingestellt werden, falls aus betrieblichen Gründen erwünscht.

Die Beschaufelung der Oberstufen kann konstruktiv in der Art gestaltet werden, dass - zwecks Anpassung der Druckverhältnisse - eine oder mehrere Stufen einfach herausgenommen, ausgewechselt oder hinzugefügt werden können. Dies ermöglicht Oberstufen im Baukastensystem, d.h. dass ein Modell der Oberstufe einen weiten Anwendungsbereich abdecken kann.

Die Oberstufen können mit verstellbaren Leitreihen an ihren Kompressoreintritten ausgeführt werden. Dies kann auch dann empfehlenswert sein, wenn die Unterstufe mit verstellbaren Leitreihen am Kompressoreintritt ausgerüstet ist, und daher der Luftmassenstrom am Austritt des Niederdruckkompressors variiert.

Die Oberstufen können mit Axialbeschaufelung, Radialbeschaufelung oder mit kombinierten Radial-Axialbeschaufelungen ausgeführt werden.

Die Oberstufen können mit oder ohne integrierter sequentieller Verbrennung ausgeführt werden. Integrierte sequentieller Verbrennung bedeutet hier, dass die sekundäre Verbrennung unmittelbar nach dem Austrittsbereich der Oberstufenturbine stattfindet und der sekundäre Verbrennungsraum konstruktiv in die Oberstufe integriert ist.

Die sequentielle Verbrennung kann auch in der Form realisiert werden, dass die sekundäre Verbrennung nicht direkt am Austritt jeder Oberstufe stattfindet, sondern in einem separaten Verbrennungsraum, zum Beispiel mit einem oder mehreren Brennern in einer oder mehreren Brennkammern, die zwischen den Oberstufen und der Niederdruck-Entspannungsturbine angeordnet sind.

Die Lage der Achsen der Oberstufen im Raum ist beliebig, sodass sie so platziert werden können, dass eine physisch optimale Anpassung an die Konstruktion der Unterstufe möglich ist. Die Achsen müssen also nicht horizontal und / oder parallel zur Achse der Unterstufe angeordnet sein.

Durch die Wahl der Anzahl Oberstufen und deren kleinen physischen Dimensionen, eignet sich die hier vorgestellte Erfindung auch bestens für die Nachrüstung bestehender Gasturbinen, weil an der bestehenden Untergruppe nicht viel geändert werden muss und die Oberstufen nicht viel Platz benötigen, sodass diese in die bestehenden Brennkammergehäuse eingebaut werden können, bzw. an diesen angebracht werden können.

Bei Nachrüstung bestehender Anlagen kann die Auslegung der Oberstufen so gewählt werden, mit oder ohne sequentielle Verbrennung, dass die Eintritts- und Austrittstemperaturen an der Niederdruck-Entspannungsturbine nicht geändert werden. Dadurch - und weil auch die gesamte Durchflussmenge gleich bleibt - kann bei Kombianlagen die nachgerüstete Gasturbinenanlage weiterhin mit dem bestehenden Abhitzekessel betrieben werden, ohne Änderungen an diesem.

Die hier vorgestellte Erfindung bringt folgende Vorteile:

- Erhöhung des Wirkungsgrades der gesamten Gasturbinenanlage bzw. Kombianlage.

- Erhöhung der Nutzleistung der gesamten Gasturbinenanlage bzw. Kombianlage.

- Die Drehzahl der Oberstufen und die Umfangsgeschwindigkeiten in der Beschaufelung der Oberstufen können so festgelegt werden, dass sie optimal den thermodynamischen Erfordernissen entsprechen.

- Die Oberstufen können so gestaltet werden, dass sie an bestehende Gasturbinen - ohne grössere Änderungen an denselben - angebaut werden können.

- Die Nachrüstung bestehender Gasturbinen mit den Oberstufen erfordert nicht zwingend Änderungen an den Beschaufelungen der Unterstufe.

- Die Lebensdauer der Niederdruck-Entspannungsturbine bleibt unverändert, da die Temperaturerhöhung nur in der Oberstufe stattfindet.

- Die Oberstufen können mit einfachen und physisch sehr kleinen Kompressor- bzw. Turbinenbeschaufelungen realisiert werden, dadurch fallen die Wartungskosten bzw. Kosten für den Ersatz der Beschaufelungen niedrig aus.

- Die Oberstufen können mit einfachen und physisch kleinen Kompressor- bzw. Turbinenbeschaufelungen realisiert werden, dadurch sind sehr kleine Schaufelspiele möglich mit entsprechend geringen Verlusten.

- Die Standzeiten der Beschaufelung der Oberstufen-Entspannungsturbine können kurz gewählt werden - was höhere Temperaturen am Eintritt der Oberstufen-Entspannungsturbine erlaubt - weil die Kosten für den Schaufelersatz wegen der kleinen Dimensionen sehr gering ausfallen.

- Die Oberstufen können in der Art an die Maschine angebaut werden, dass sie innert kürzester Zeit herausgenommen und durch neue bzw. neu revidierte ersetzt werden können. Für diesen Austausch kann eine Anzahl Oberstufen an Lager gehalten werden.

- Aufgrund der kleinen Dimensionen ist ein Auswechseln der Beschaufelung der Oberstufen-Entspannungsturbine in kürzester Zeit möglich.

- Die Wartungsintervalle der Unterstufe, die hauptsächlich von der Temperaturbeanspruchung der ersten Stufe der Niederdruck-Entspannungsturbine definiert werden, können, wenn gewünscht, verlängert werden. Grund: Die wesentliche Erhöhung des Gesamtwirkungsgrades erlaubt, wenn gewünscht, eine Verringerung der Eintrittstemperatur an der Niederdruck-Entspannungsturbine, bei immer noch beträchtlich höherem Gesamtwirkungsgrad.

- Bei neu zu entwickelnden Gasturbinentypen kann der grösste Teil der Entwicklungsarbeit sich auf die physisch kleinen und daher günstigen Oberstufen konzentrieren,

- Weitere Wirkungen und Vorteile der hier beschriebenen Gegenstände, ob explizit angegeben oder nicht, ergeben sich im Lichte der vorliegenden Beschreibung.

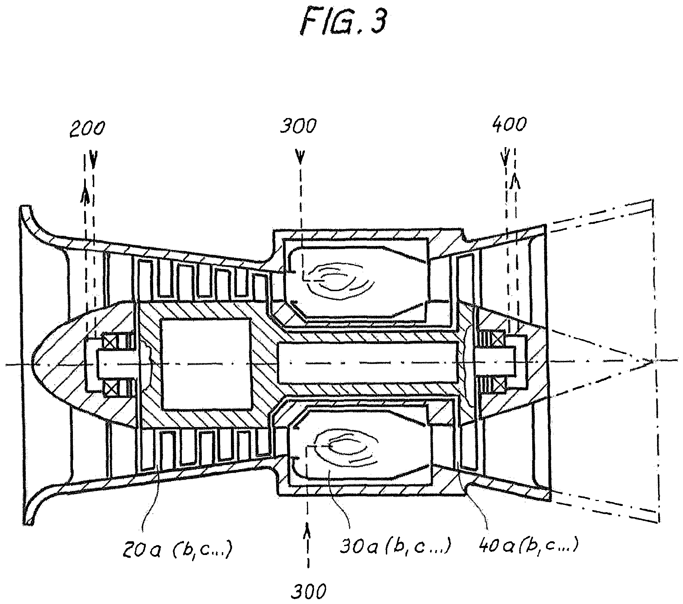

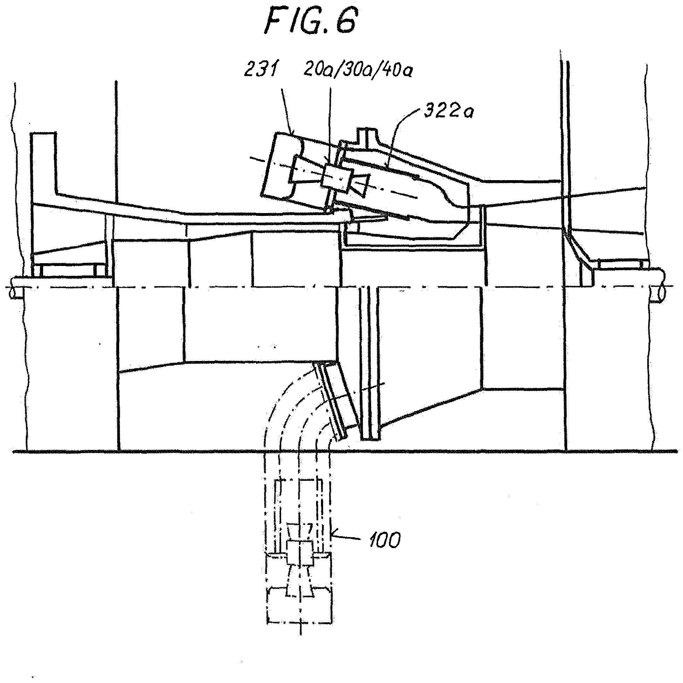

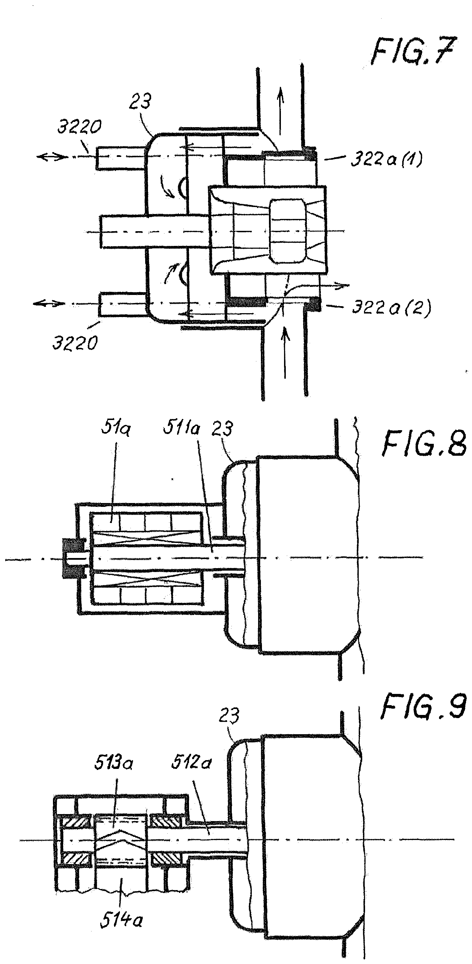

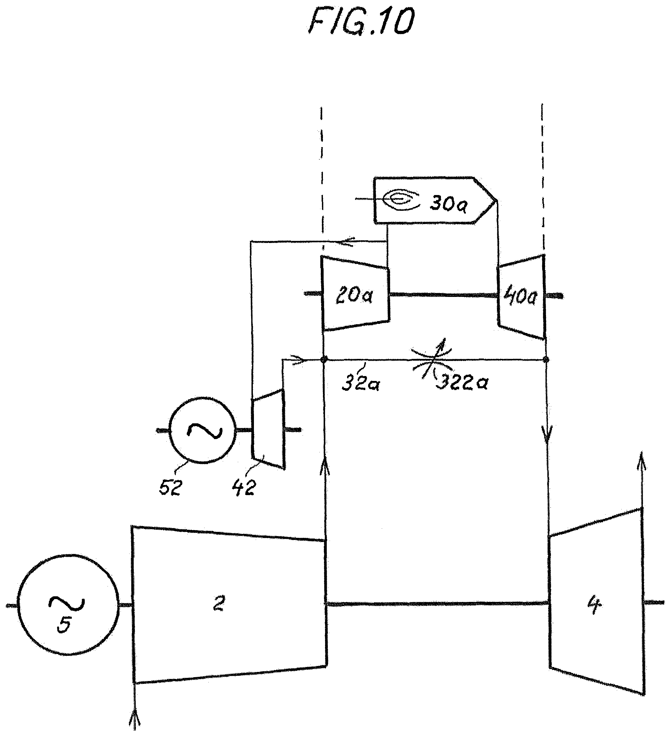

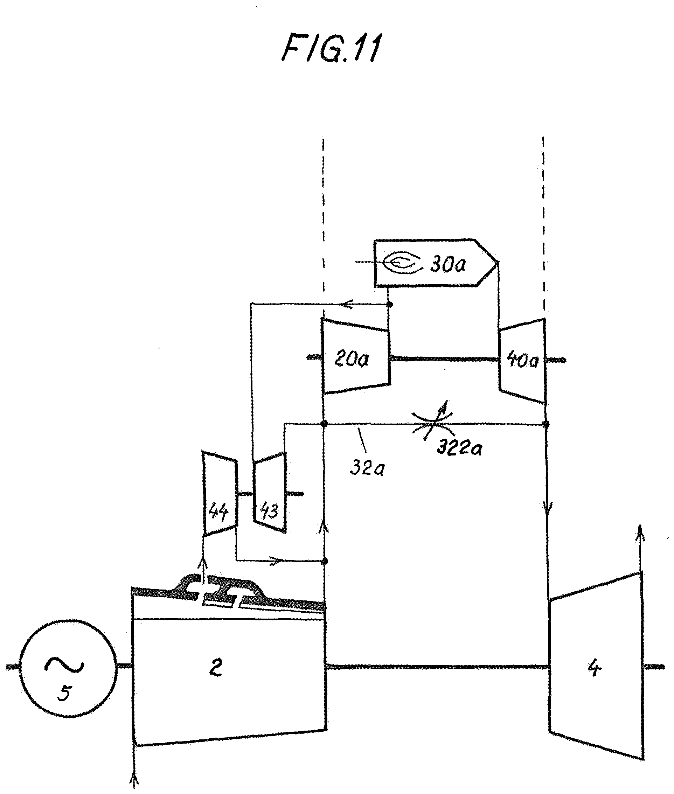

Auf Zeichnungen FIG 3 bis FIG 12 dargestellte Ausführungsbeispiele:

FIG. 3

Diese Schnittzeichnung zeigt beispielhaft eine mögliche Ausführung der Oberstufe, hier beispielweise mit axialer Beschaufelung.
Details

20a    Hochdruck-Kompressor
30a    Brennkammer(n)
40a    Hochdruck-Entspannungsturbine
200    Kühlmittelzufuhr- und -Kühlmittelabfuhrleitung für Hochdruck-Kompressor
300    Brennstoffzuleitung
400    Kühlmittelzufuhr- und -Kühlmittelabfuhrleitung für Hochdruck-Entspannungsturbine

Der Eintritt des Hochdruck-Kompressors 20a - in FIG 3 links gezeichnet - steht mit dem Austritt des Niederdruckkompressors in direkter Fluidverbindung. Der Austritt der Hochdruck-Entspannungsturbine 40a - in FIG 3 rechts gezeichnet - steht mit dem Eintritt der Niederdruck-Entspannungsturbine in direkter Fluidverbindung.

FIG. 4

Dieses Bild zeigt ein Ausführungsbeispiel einer Nachrüstung einer Gasturbine mit Silo-Brennkammer, d.h. die Silo-Brennkammer wird in diesem Beispiel durch einen Nachrüstsatz ersetzt.
Das Bild zeigt eine Gasturbine mit seitlich angebrachter Silobrennkammer, die mit der Gasturbine über eine Gas-Luftleitung 353 verbunden ist. Anstelle der Silobrennkammer ist der Nachrüstsatz 354 montiert, in dem die Oberstufen eingebaut sind. Linie 350 deutet die Silobrennkammer an, die entfernt wurde.
Schematisch gezeigt ist auch die Variante, bei welcher der Nachrüstsatz oben auf der Gasturbine montiert ist.

Linie 351 deutet beispielhaft einen oben auf der Gasturbine montierten Nachrüstsatz an, Linie 352 deutet die Silobrennkammer an, die hierfür entfernt wurde.)

FIG. 5

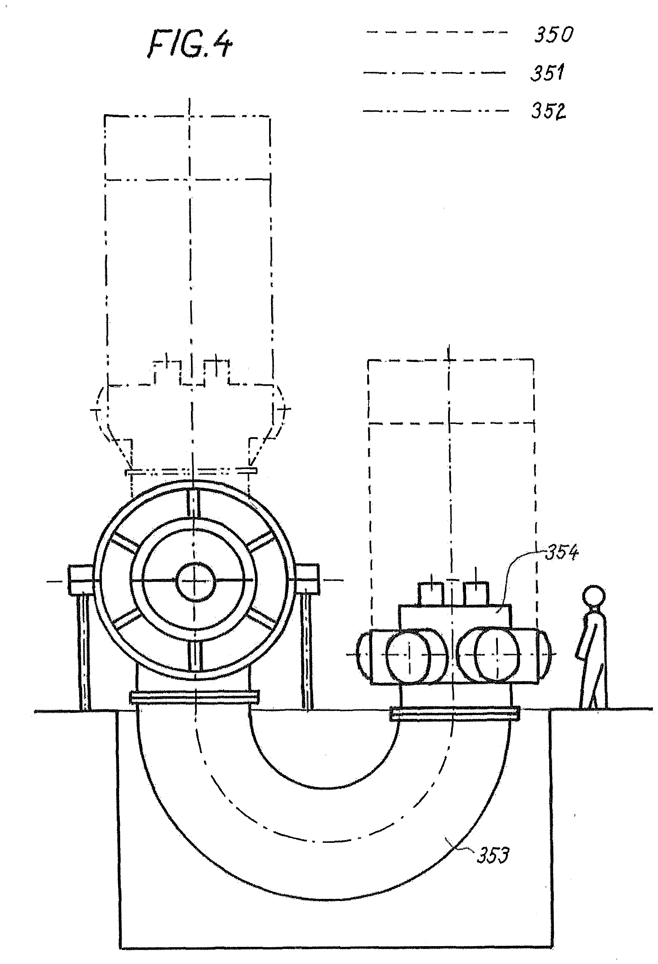

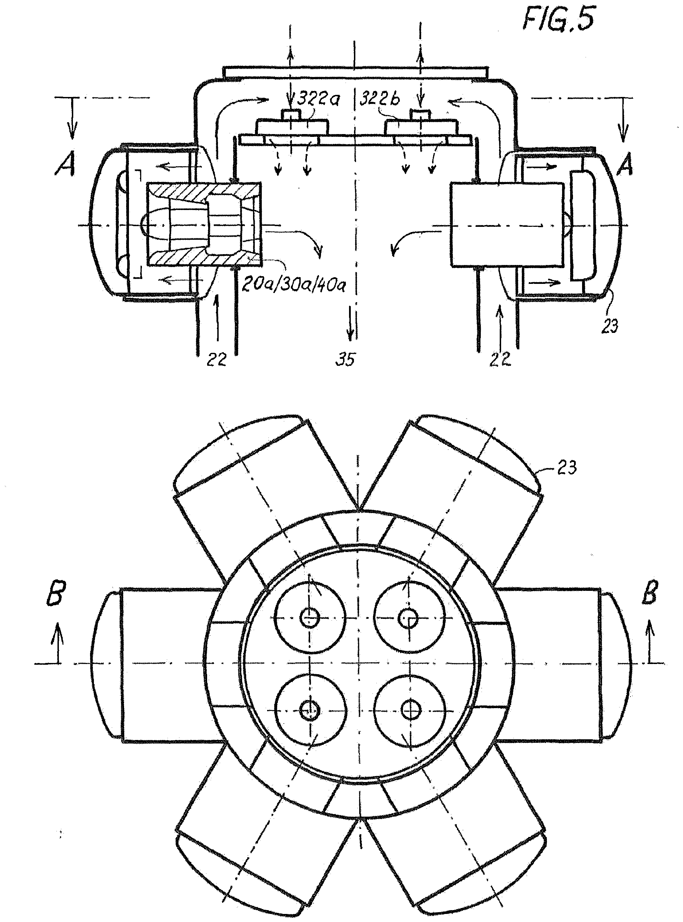

Dieses Bild zeigt ein Beispiel eines Nachrüstungs-Satzes für eine Gasturbine mit Silo-Brennkammer (wie FIG. 4) im Detail. FIG. 5 zeigt oben den Schnitt B-B, unten den Schnitt A-A. Es sind folgende Details erkennbar:

| | |
|---|---|
| 23 | Oberstufengehäuse (in diesem Beispiel insgesamt sechs Oberstufen) |
| 20a/30a/40a | Oberstufe im Schnitt |
| 22 | Luftströmung vom Niederdruckkompressor |
| 35 | Gasströmung zur Niederdruck-Entspannungsturbine |
| 322a, 322b | Luft-Bypassventile |

Die Luft-Bypassventile - hier schematisch gezeichnet - erfüllen den Zweck, die Luftmenge, die durch den Kompressor der Unterstufe strömt, stets auf dem optimalen Wert zu halten, auch bei Teillastbetrieb und beim Anfahren bzw. Abstellen.

Das Regelsystem der Gasturbine misst und regelt die Verteilung der Luftmengen auf die einzelnen Oberstufen und die Bypass-Ströme. Das Regelsystem der Anlage wirkt hierfür einerseits auf die Oberstufen ein, über deren jeweiliges Regelsystem, andererseits auf die Bypass-Ströme über Ventile (hier beispielhaft 322a, 322b), Schieber oder dergleichen.

Des Weiteren besteht die Möglichkeit, bei Teillast nur einen Teil der Oberstufen zu betreiben. Die Bypass-Ströme können entsprechend eingestellt werden.

FIG. 6

Dieses Bild zeigt eine Gasturbine mit multiplen Brennkammern: In die multiplen Brennkammern sind Oberstufen eingebaut.

Folgende Details sind erkennbar:

| | |
|---|---|
| 231 | Oberstufengehäuse (Anzahl Oberstufen zum Beispiel wie vorher die Anzahl Brennkammern. Die Oberstufen gemäss der hier vorgestellten Erfindung sind auch an Ringbrennkammern einsetzbar). |
| 20a/30a/40a | Oberstufe |
| 322a | Luft-Bypassvorrichtung (verstellbares Drosselorgan), hier schematisch als Schieber gezeichnet |
| 100 | Hier wird beispielhaft eine Oberstufe gezeigt, die mit dem Unterstufengehäuse über eine neue Gas-Luftleitung verbunden ist. (Das ist eine mögliche Option. Es kann auch je eine Oberstufe an zwei oder mehreren Brennkammergehäusen angeschlossen werden.) |

FIG. 7

Dieses Bild zeigt schematisch eine Oberstufe, wie beispielsweise für Nachrüstung einer Gasturbine mit Silo-Brennkammer (wie FIG. 5), mit Bypass-Schiebern anstelle von Bypassventilen.

Folgende Details sind erkennbar:

| | |
|---|---|
| 23 | Oberstufen-Gehäuse |
| 3220 | Verschiebeantrieb der Luft-Bypass-Schieber |
| 322a(1) | Luft-Bypass-Schieber in Position geschlossen |
| 322a(2) | Luft-Bypass-Schieber in Position offen |

FIG. 8

Dieses Bild zeigt schematisch eine Oberstufe, wie beispielsweise für die Nachrüstung einer Gasturbine mit Silo-Brennkammer (wie FIG. 5), mit direkt gekoppeltem Nutzleistungsgenerator.

Folgende Details sind erkennbar:

| | |
|---|---|
| 23 | Oberstufen-Gehäuse |
| 511a | Abtriebswelle der Oberstufe |
| 51a | direkt angetriebener Generator |

FIG. 9

Dieses Bild zeigt schematisch eine Oberstufe, wie beispielsweise für Nachrüstung einer Gasturbine mit Silo-Brennkammer (wie FIG. 5) mit über ein Getriebe gekoppeltem Nutzleistungsgenerator. Der Generator selbst ist nicht gezeichnet.

Folgende Details sind erkennbar:

| | |
|---|---|
| 23 | Oberstufen-Gehäuse |
| 512a | Abtriebswelle der Oberstufe |
| 513a | von der Abtriebswelle 512a angetriebenes Ritzel |
| 514a | Rad des Zwischengetriebes (nicht komplett gezeichnet) |

FIG. 10

Dieses Bild zeigt beispielhaft das thermische Schema einer Nachrüstung einer Gasturbine. Die Beschaufelungen des Niederdruckkompressors und der Niederdruck-Entspannungsturbine bleiben unverändert. Der Einfachheit halber ist nur eine von mehreren Oberstufen gezeichnet. Dies ist eine Variante mit mechanischer Leistungsauskopplung aus der Oberstufe via Luftexpanderturbine 42 und davon angetriebenem Generator 52. Die Kompressoren 20a, etc. der Oberstufe sind um die Mehrmenge, die die Luftexpanderturbine 42 benötigt, grösser ausgeführt. Die Luftexpanderturbine kann in der Art angeschlossen werden, dass alle oder mehrere Zuleitungen von den Oberstufenkompressoren zusammengefasst werden, und so an die Luftexpanderturbine 42 angeschlossen werden. Möglich ist auch eine Schaltung mit mehreren Luftexpanderturbinen.

Folgende Details sind erkennbar:

| | |
|---|---|
| 2 | Niederdruckkompressor |
| 20a, 30a, 40a | Oberstufe (der Einfachheit halber nur eine einzige Oberstufe gezeichnet) |
| 4 | Niederdruck-Entspannungsturbine |
| 32a | Bypass (der Einfachheit halber ist nur ein einziger gezeichnet) |
| 322a | verstellbares Drosselorgan |
| 42 | Luftexpanderturbine |
| 52 | Generator |
| 5 | Generator |

FIG. 11

Dieses Bild zeigt beispielhaft das thermische Schema einer Nachrüstung einer bestehenden Gasturbine. Die Beschaufelung der Niederdruck-Entspannungsturbine bleibt unverändert. Der Einfachheit halber ist nur eine von mehreren Oberstufen gezeichnet. Dies ist eine Variante mit mechanischer Leistungsauskopplung aus der Oberstufe via Luftexpanderturbine 43 und davon angetriebenem zusätzlichem Kompressor 44, der einen Teil der Verdichtungsarbeit des Niederdruckkompressors 2 übernimmt. Die Kompressoren 20a, etc. der Oberstufe sind um die Mehrmenge, die die Luftexpanderturbine 44 benötigt, grösser ausgeführt. Die Luftexpanderturbine kann in der Art angeschlossen werden, dass alle Zuleitungen von den Oberstufen zusammengefasst werden, und so an die Luftexpanderturbine angeschlossen werden. Möglich ist auch eine Schaltung mit mehreren Luftexpanderturbinen. Die Beschaufelung des Niederdruckkompressors wird so abgeändert, dass ein Teil der Kompressorleistung vom zusätzlichen Kompressor 44, der seine Leistung von den Oberstufen bezieht, übernommen werden kann. In dem gezeichneten Beispiel wird ein Teil der Luft des Niederdruckkompressors durch dessen Ausblaseschlitz entnommen, dafür wird die Durchflussmenge im verbleibenden Teil des Niederdruckkompressors reduziert. Bei Anordnungen dieser Art, d.h. bei gezielter Anpassung des Niederdruckkompressors, ist auch bei Nachrüstungen keine separat angeordnete Leistungsauskopplung nach aussen erforderlich. Die mechanische Mehrleistung wirkt in diesen Fällen auf die Welle der Untergruppe und wird über den bestehenden Generator nach aussen abgegeben.

Folgende Details sind erkennbar:

| | |
|---|---|
| 2 | Niederdruckkompressor |
| 20a, 30a, 40a | Oberstufe (der Einfachheit halber nur eine einzige Oberstufe gezeichnet) |
| 4 | Niederdruck-Entspannungsturbine |
| 32a | Luft-Bypass (der Einfachheit halber ist nur ein einziger gezeichnet) |
| 322a | verstellbares Drosselorgan |
| 43 | Luftexpanderturbine |

| 44 | Kompressor |
| 5 | Generator |

FIG. 12

Dieses Bild zeigt beispielhaft das thermische Schema einer Kombianlage, mit einer Anwendung einer Gasturbine 1 nach der hier vorgestellten Erfindung (gemäss Patentanspruch 1).

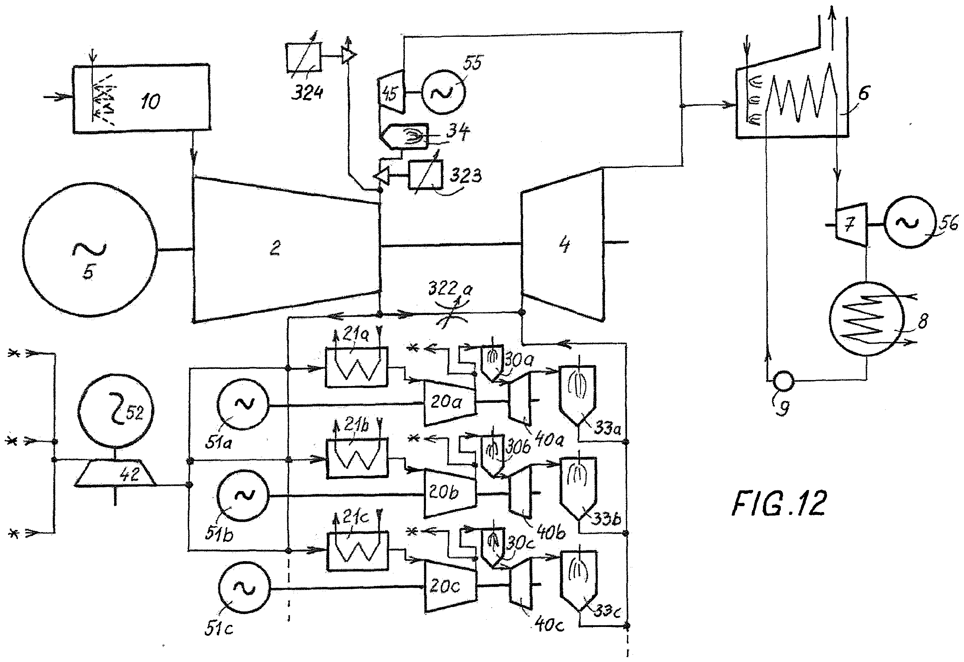

Folgende Details sind in FIG 12 erkennbar:

| 10 | Ansaugfilter mit Kühlsystem |
| 2 | Niederdruckkompressor |
| 4 | Niederdruck-Entspannungsturbine |
| 5 | Generator |
| 6 | Abhitzekessel mit Rauchgasbehandlung |
| 7 | Dampfturbine |
| 56 | Generator |
| 8 | Kondensator |
| 9 | Speisewasserpumpe |
| 21a, 21b, 21c | Zwischenkühler vor Kompressor Oberstufe |
| 20a, 20b, 20c | Kompressor-Oberstufe (als Beispiel sind hier drei gezeichnet) |
| 30a, 30b, 30c | Gaserwärmer Oberstufe |
| 40a, 40b, 40c | Hochdruck-Entspannungsturbine |
| 51a, 51b, 51c | Nutzleistungsgenerator an Oberstufe (als Beispiel: drei gezeichnet) |
| 322a | verstellbares Drosselorgan(der Einfachheit halber ist nur ein einzelner Bypass gezeichnet) |
| 33a, 33b, 33c | Gaserwärmer nach Oberstufe, für sequentielle Verbrennung |
| 42 | Luftexpanderturbine (Anschlusspunkte mit * gekennzeichnet) |
| 52 | Generator |
| 323 | Entlastungsventil nach Niederdruckkompressor |
| 324 | Entlastungsventil nach Niederdruckkompressor für Pumpverhütung |
| 34 | Gaserwärmer nach Entlastungsventil |
| 45 | Niederdruck-Entspannungsturbine |
| 55 | Generator |

Kommentare zu diversen Details, die in FIG 12 erkennbar sind:

Zu Details 21a, 21b,21c:
Hier erkennbar sind Zwischenkühler, die vor dem Kompressor der Oberstufe positioniert sind. Diese können zur möglichen weiteren Optimierung des gesamten thermischen Prozesses dienen. Die Anzahl Zwischenkühler muss nicht gleich sein wie die Anzahl Oberstufen. Anstelle von separaten Zwischenkühlern pro Oberstufe kann beispielsweise auch ein einzelner Zwischenkühler, angeordnet nach dem Niederdruckkompressor, verwendet werden.

Zu Details 33a, 33b, 33c:
Hier erkennbar sind Brennkammern, die zwischen der Oberstufenturbine und der Niederdruck-Entspannungsturbine positioniert sind. Diese können, als zweite Stufe der sequentiellen Verbrennung, zur Optimierung des gesamten thermischen Prozesses dienen.

Zu Detail 323:
Hier schematisch gezeichnet ist ein regelbares Entlastungsventil, das es ermöglicht, die Luft nach dem Kompressor der Unterstufe in eine nachgeschaltete Brennkammer und weiter in eine Niederdruck-Entspannungsturbine auszublasen. Anstelle der einfachen Expander-Turbine, wie hier gezeichnet, kann auch eine Hochdruckgasturbine vorgesehen werden, d.h. im Prinzip eine zusätzliche Oberstufe, aber mit Abgasleitung in den Kamin, mit Nutzleistungsabgabe.

Zu Detail 324:
Das hier schematisch gezeichnete Entlastungsventil 324 dient zur Pumpverhütung. Es wird gesteuert von der Pumpverhütungsregelung und dem Pumpschutz. Es verhindert erforderlichenfalls, dass der Niederdruckkompressor in einen instabilen Betriebsbereich gerät, d.h. an die Pumpgrenze stösst.

Allgemeine Bemerkung: Obschon der Gegenstand der vorliegenden Beschreibung anhand ausgewählter Ausführungsbeispiele erläutert wurde, sollen diese nicht einer Einschränkung der beanspruchten Erfindung dienen. Die Ansprüche umfassen Ausführungsformen, die nicht explizit dargestellt sind, und Ausführungsformen, die von den gezeigten Beispielen abweichen, sind dennoch von den Ansprüchen gedeckt.

*Liste der Zeichnungen:*

| FIG. 1 | Ein beispielhaftes thermisches Schaltbild einer klassischen stationären Gasturbine |
|---|---|
| FIG. 2 | Ein beispielhaftes thermisches Schaltbild der Gasturbine 1 gemäss Erfindung, mit Obergruppen und Bypässen |
| FIG. 3 | Ausführungsbeispiel Obergruppe |
| FIG. 4 | Gasturbine mit Silobrennkammer, Ausführungsbeispiel einer Nachrüstung mit Obergruppen |
| FIG. 5 | Ausführungsbeispiel nach FIG. 4, Details |
| FIG. 6 | Gasturbine mit multiplen Brennkammern (Cans), Ausführungsbeispiel einer Nachrüstung mit Obergruppen |
| FIG. 7 | Ausführungsbeispiel einer Oberstufe mit Bypass-Schiebern, angebaut an Silo-Brennkammer |
| FIG. 8 | Ausführungsbeispiel einer Oberstufe, angebaut an Silo-Brennkammer, mit direkt gekoppeltem Nutzleistungsgenerator |
| FIG. 9 | Ausführungsbeispiel einer Oberstufe, angebaut an Silo-Brennkammer, mit über Getriebe gekoppeltem Nutzleistungsgenerator |
| FIG. 10 | Ausführungsbeispiel: Thermisches Schaltbild der Leistungsauskopplung aus der Oberstufe über Luftturbine und von dieser angetriebenem Generator |
| FIG. 11 | Ausführungsbeispiel: Thermisches Schaltbild der Leistungsauskopplung aus der Oberstufe über Luftturbine und Kompressor, mit Anpassung des Niederdruckkompressors |
| FIG. 12 | Ausführungsbeispiel: Thermisches Schaltbild mit der Gasturbine 1, gemäss Patentanspruch 1, an einer Kombianlage, mit diversen Varianten |

Auf welchen Zeichnungen, sind welche Details, ersichtlich?

| Detail | Bezeichnung | wo ersichtlich |
|---|---|---|
| 1 | Gasturbine | FIG 2 |
| 2 | Kompressor = Niederdruckkompressor | FIG 1, FIG 2, FIG 10, FIG 11, FIG 12 |
| 20a, 20b, 20c, ... | Hochdruckkompressor(-en) | FIG 2, FIG 3, FIG 5, FIG 6, FIG 10, FIG 11, FIG 12 |
| 200 | Kühlleitungen zu Hochdruckkompressor | FIG 3 |
| 21a, 21b, 21c, etc. | Zwischenkühler | FIG 12 |
| 22 | Luftströmung | FIG 5 |
| 23 | Gehäuse | FIG 5, FIG 7, FIG 8, FIG 9 |
| 231 | Gehäuse | FIG 6 |
| 3 | Gaserwärmer | FIG 1 |
| 30a | Hochdruck-Gaserwärmer | FIG2, FIG 3, FIG 5, FIG 6, FIG 10, FIG 11, FIG 12 |
| 300 | Brennstoffleitungen zu Hochdruck-Gaserwärmer | FIG 3 |
| 31a, 31b, 31c | Luftleitung zwischen Niederdruckkompressor und Hochdruckkompressor | FIG 2 |
| 32a, 32b, 32c | Bypassleitung | FIG 2, FIG 10, FIG 11 |

(fortgesetzt)

| Detail | Bezeichnung | wo ersichtlich |
|---|---|---|
| 322a, 322b, 322c, etc. | Verstellbares Drosselorgan | FIG 2, FIG 5, FIG 6, FIG 7, FIG 10, FIG 11 |
| 3220 | Antrieb | FIG 7 |
| 323 | Gesteuertes Ventil | FIG 12 |
| 324 | Gesteuertes Ausblaseventil | FIG 12 |
| 33a, 33b, 33c | Gaserwärmer, zwischen Hochdruck-Entspannungsturbine und Einlass Niederdruck-Entspannungsturbine | FIG 12 |
| 34 | Gaserwärmer | FIG 12 |
| 35 | Heissgasströmung zur Niederdruck-Entspannungsturbine | FIG 5 |
| 350 | Kontur | FIG 4 |
| 351 | Kontur | FIG 4 |
| 352 | Kontur | FIG 4 |
| 353 | Gas-Luftleitung | FIG 4 |
| 354 | Nachrüstungssatz | FIG 4 |
| 4 | Entspannungsturbine = Niederdruck-Entspannungsturbine | FIG 1, FIG 2, FIG 10, FIG 11, FIG 12 |
| 40a, 40b, 40c, etc. | Hochdruck-Entspannungsturbine(-en) | FIG 2, FIG 3, FIG 5, FIG 6, FIG 10, FIG 11, FIG 12 |
| 400 | Kühlleitungen zu Hochdruck-Entspannungsturbine | FIG 3 |
| 41 | Entspannungsturbine Split-Shaft | FIG 1 |
| 42 | Luftexpanderturbine | FIG 10, FIG 12 |
| 43 | Luftexpanderturbine | FIG 11 |
| 44 | Kompressor | FIG 11 |
| 45 | Luftexpanderturbine | FIG 12 |
| 5 | Generator, angetrieben von Unterstufenwelle | FIG 10, FIG 11, FIG 12 |
| 51a, 51b, 51c, etc. | Generator, angetrieben von Oberstufenwelle | FIG 8, FIG 12 |
| 511a | Antriebswelle | FIG 8 |
| 512a | Antriebswelle | FIG 9 |
| 513a | Ritzel | FIG 9 |
| 514a | Getrieberad | FIG 9 |
| 52 | Generator, angetrieben von Luftexpander 42 | FIG 10, FIG 12 |
| 55 | Generator, angetrieben von Luftexpander 45 | FIG 12 |
| 56 | Generator, angetrieben von Dampfturbine 7 | FIG 12 |
| 6 | Abhitzekessel, hier mit Zusatzfeuerung | FIG 12 |
| 7 | Dampfturbine | FIG 12 |
| 8 | Kondensator | FIG 12 |
| 9 | Speisewasserpumpe | FIG 12 |
| 10 | Ansaugfilter mit Kühlsystem | FIG 12 |

(fortgesetzt)

| Detail | Bezeichnung | wo ersichtlich |
|--------|-------------|----------------|
| 100 | Oberstufe, mit Combustor-Can über Gasluftleitung verbunden | FIG 6 |

**Patentansprüche**

1. Gasturbine (1), umfassend: einen Niederdruckkompressor (2) und eine Niederdruck-Entspannungsturbine (4), angeordnet auf einer gemeinsamen Welle, welche zusammen eine Unterstufe bilden, sowie wenigstens zwei Oberstufen, wobei jede Oberstufe einen Hochdruckkompressor (20a, 20b, 20c), einen dem Hochdruckkompressor nachgeschalteten Gaserwärmer (30a, 30b, 30c) sowie eine dem Gaserwärmer in Strömungsrichtung nachgeschaltet und mit dem Hochdruckkompressor auf einer gemeinsamen Welle befindliche Hochdruck-Entspannungsturbine (40a, 40b, 40c) umfasst,
wobei ein Einlass jeder der Hochdruckkompressoren mit einem Auslass des Niederdruckkompressors in unmittelbarer Fluidverbindung steht und ein Auslass jeder der Hochdruck-Entspannungsturbinen mit einem Einlass der Niederdruck-Entspannungsturbine in unmittelbarer Fluidverbindung steht, wobei weiterhin wenigstens eine Bypassleitung (32a, 32b, 32c) mit dem Auslass des Niederdruckkompressors und dem Einlass der Niederdruck-Entspannungsturbine verbunden ist, wobei ausserdem in jeder Bypassleitung ein verstellbares Drosselorgan (322a, 322b, 322c) angeordnet ist.

2. Gasturbine (1) nach Anspruch 1, wobei der Gaserwärmer eine Brennkammer ist.

3. Gasturbine (1) nach einem der vorstehenden Ansprüche, wobei die Wellenachsen der strömungsmässig parallel geschalteten und von unterschiedlichen ersten Teilmassenströmen durchströmten Oberstufen differieren von der Wellenachse der Unterstufe.

4. Gasturbine (1) nach einem der vorstehenden Ansprüche, wobei die Wellenachsen der strömungsmässig parallel geschalteten und von unterschiedlichen ersten Teilmassenströmen durchströmten Oberstufen in einem von Null verschiedenen Winkel von der Wellenachse der Unterstufe abweichen.

5. Gasturbine (1) nach einem der vorstehenden Ansprüche, wobei mechanische Leistung aus einer oder mehreren Oberstufen nach aussen abgegeben wird, wobei Leistung von der Welle einer jeweiligen Oberstufe entweder direkt über eine Welle (511a). die mit der Welle der jeweiligen Oberstufe verbunden ist, auf einen Generator, oder direkt über eine Welle (512a), die mit der Welle der jeweiligen Oberstufe verbunden ist, auf ein Getriebe ausgekoppelt wird.

6. Gasturbine (1) nach einem der vorstehenden Ansprüche, wobei mechanische Leistung aus einer oder mehreren Oberstufen nach aussen abgegeben wird, wobei Leistung in Form komprimierter Luft aus dem jeweiligen Hochdruckkompressor (20a, 20b, 20c) mittels direkter Fluidverbindung in wenigstens einen Luftexpander (42) ausgekoppelt wird, der einen Generator (52) antreibt, wobei der Einlass des wenigstens einen Luftexpanders (42) mit dem Auslass der Hochdruckkompressoren (20a, 20b, 20c) in unmittelbarer Fluidverbindung steht und der Auslass des wenigstens einen Luftexpanders mit dem Auslass des Niederdruckkompressors (2) und dem Einlass der Hochdruckkompressoren (20a, 20b, 20c) in unmittelbarer Fluidverbindung steht.

7. Verfahren zum Betreiben einer Gasturbine (1), umfassend einen Gesamtluftmassenstrom in einem Niederdruckkompressor (1) zu verdichten, den Gesamtluftstrom stromab des Niederdruckkompressors in Teilmassenströme aufzuteilen, wenigstens zwei erste Teilmassenströme in jeweils einem Hochdruckkompressor (20a, 20b, 20c) weiter zu verdichten, den wenigstens zwei ersten Teilmassenströmen stromab des jeweiligen Hochdruckkompressors Wärme zuzuführen, die wenigstens zwei ersten Teilmassenströme nach der Wärmezufuhr in jeweils einer Hochdruck-Entspannungsturbine (40a, 40b, 40c) zu entspannen, und die wenigstens zwei ersten Teilmassenströme stromab der Hochdruck-Entspannungsturbinen in einer gemeinsamen Niederdruck-Entspannungsturbine (4) zusammenzuführen und weiter zu entspannen, wobei das Verfahren weiter umfasst, stromab des Niederdruckkompressors wenigstens einen zweiten Teilmassenstrom abzuzweigen, und diesen durch wenigstens eine Bypassleitung der Niederdruck-Entspannungsturbine zuzuführen, wobei der Durchfluss durch die wenigstens eine Bypassleitung (32a, 32b, 32c) mittels verstellbarer Drosselorgane (322a, 322b, 322c), welche von einem Regelsystem gesteuert werden, geregelt wird.

**EP 3 810 910 B1**

8. Verfahren zum Betreiben einer Gasturbine (1) nach dem vorstehenden Anspruch, wobei mechanische Leistung aus den Oberstufen abgegeben wird und wobei die Gasturbine eine Gasturbine gemäss Anspruch 5 ist, wobei Leistung von der Welle der jeweiligen Oberstufe entweder direkt über eine Welle (511a), die mit der Welle der jeweiligen Oberstufe verbunden ist, auf einen Generator, oder direkt über eine Welle (512a), die mit der Welle der jeweiligen Oberstufe verbunden ist, auf ein Getriebe ausgekoppelt wird.

9. Verfahren zum Betreiben einer Gasturbine (1), nach dem vorstehenden Anspruch, wobei mechanische Leistung aus den Oberstufen abgegeben wird und wobei die Gasturbine eine Gasturbine gemäss Anspruch 6 ist, wobei Leistung in Form komprimierter Luft aus dem jeweiligen Hochdruckkompressor (20a, 20b, 20c) mittels direkter Fluidverbindung in wenigstens einen Luftexpander (42) ausgekoppelt wird, der einen Generator (52) antreibt, wobei der Einlass des wenigstens einen Luftexpanders (42) mit dem Auslass der Hochdruckkompressoren (20a, 20b, 20c) in unmittelbarer Fluidverbindung steht und der Auslass des wenigstens einen Luftexpanders mit dem Auslass des Niederdruckkompressors (2) und dem Einlass der Hochdruckkompressoren (20a, 20b, 20c) in unmittelbarer Fluidverbindung steht.

**Claims**

1. A gas turbine (1), comprising: a low-pressure compressor (2) and a low-pressure expansion turbine (4), which are arranged on a common shaft and together form a lower stage, as well as at least two upper stages, each upper stage comprising a high-pressure compressor (20a, 20b, 20c), a gas heater (30a, 30b, 30c) arranged downstream of the high-pressure compressor, and a high-pressure expansion turbine (40a, 40b, 40c) which is arranged downstream of the gas heater in the flow direction and is located on a common shaft together with the high-pressure compressor,

   an inlet of each of the high-pressure compressors being in direct fluid communication with an outlet of the low-pressure compressor, and an outlet of each of the high-pressure expansion turbines being in direct fluid communication with an inlet of the low-pressure expansion turbine,
   at least one bypass line (32a, 32b, 32c) furthermore being connected to the outlet of the low-pressure compressor and the inlet of the low-pressure expansion turbine, an adjustable throttle member (322a, 322b, 322c) moreover being arranged in each bypass line.

2. The gas turbine (1) according to Claim 1, the gas heater being a combustion chamber.

3. The gas turbine (1) according to any of the preceding claims, wherein the shaft axes of the upper stages, which are connected in parallel in terms of flow and through which different first partial mass flows pass, differ from the shaft axis of the lower stage.

4. The gas turbine (1) according to any of the preceding claims, wherein the shaft axes of the upper stages, which are connected in parallel in terms of flow and through which different first partial mass flows pass, depart from the shaft axis of the lower stage at a non-zero angle.

5. The gas turbine (1) according to any of the preceding claims, wherein mechanical power is output to the outside from one or more upper stages, wherein power is decoupled from the shaft of a respective upper stage either directly to a generator via a shaft (511a) connected to the shaft of the respective upper stage, or directly to a gearbox via a shaft (512a) connected to the shaft of the respective upper stage.

6. The gas turbine (1) according to any of the preceding claims, wherein mechanical power is output to the outside from one or more upper stages, wherein power in the form of compressed air is decoupled from the respective high-pressure compressor (20a, 20b, 20c) by direct fluid communication into at least one air expander (42), which drives a generator (52), wherein the inlet of the at least one air expander (42) is in direct fluid communication with the outlet of the high-pressure compressors (20a, 20b, 20c), and the outlet of the at least one air expander is in direct fluid communication with the outlet of the low-pressure compressor (2) and the inlet of the high-pressure compressors (20a, 20b, 20c).

7. A method for operating a gas turbine (1), comprising: compressing a total air mass flow in a low-pressure compressor (1), dividing the total air flow into partial mass flows downstream of the low-pressure compressor, further compressing at least two first partial mass flows in respective high-pressure compressors (20a, 20b, 20c), supplying heat to the at least two first partial mass flows downstream of the respective high-pressure compressor, expanding the at least two first partial mass flows after the heat supply in respective high-pressure expansion turbines (40a, 40b, 40c), and combining and further expanding the at least two first partial mass flows downstream of the high-pressure expansion turbines in a common low-pressure expansion turbine (4), the method further comprising: branching off at least one second partial mass flow downstream of the low-pressure compressor and supplying said at least one second partial mass flow to the low-pressure expansion turbine through at least one bypass line, the flow through said at least one bypass line (32a, 32b, 32c) being controlled by adjustable throttle members (322a, 322b, 322c) which are controlled by a control system.

8. The method for operating a gas turbine (1), according to the preceding claim, wherein mechanical power is outputted from the upper stages and wherein the gas turbine is a gas turbine according to Claim 5, wherein power is decoupled from the shaft of the respective upper stage either directly to a generator via a shaft (511a) connected to the shaft of the respective upper stage, or directly to a gearbox via a shaft (512a) connected to the shaft of the respective upper stage.

9. The method for operating a gas turbine (1), according to the preceding claim, wherein mechanical power is outputted from the upper stages and wherein the gas turbine is a gas turbine according to Claim 6, wherein power in the form of compressed air is decoupled from the respective high-pressure compressor (20a, 20b, 20c) by direct fluid communication into at least one air expander (42), which drives a generator (52), wherein the inlet of the at least one air expander (42) is in direct fluid communication with the outlet of the high-pressure compressors (20a, 20b, 20c), and the outlet of the at least one air expander is in direct fluid communication with the outlet of the low-pressure compressor (2) and the inlet of the high-pressure compressors (20a, 20b, 20c).

**Revendications**

1. Turbine à gaz (1), comprenant : un compresseur basse pression (2) et une turbine de détente basse pression (4) disposés sur un arbre commun, lesquels forment conjointement un étage inférieur, ainsi qu'au moins deux étages supérieurs, chaque étage supérieur comprenant un compresseur haute pression (20a, 20b, 20c), un réchauffeur de gaz (30a, 30b, 30c) raccordé en aval du compresseur haute pression ainsi qu'une turbine de détente haute pression (40a, 40b, 40c) raccordée en aval du réchauffeur de gaz dans la direction d'écoulement et située avec le compresseur haute pression sur un arbre commun,

dans laquelle une entrée de chacun des compresseurs haute pression se trouve en liaison fluidique directe avec une sortie du compresseur basse pression et une sortie de chacune des turbines de détente haute pression se trouve en liaison fluidique directe avec une entrée de la turbine de détente basse pression,
dans laquelle en outre au moins une conduite de dérivation (32a, 32b, 32c) est reliée à la sortie du compresseur basse pression et à l'entrée de la turbine de détente basse pression,
dans laquelle de plus un organe d'étranglement réglable (322a, 322b, 322c) est disposé dans chaque conduite de dérivation.

2. Turbine à gaz (1) selon la revendication 1, dans laquelle le réchauffeur de gaz est une chambre de combustion.

3. Turbine à gaz (1) selon l'une des revendications précédentes, dans laquelle les axes d'arbre des étages supérieurs raccordés en parallèle conformément à l'écoulement et traversés par différents premiers débits massiques partiels diffèrent de l'axe d'arbre de l'étage inférieur.

4. Turbine à gaz (1) selon l'une des revendications précédentes, dans laquelle les axes d'arbre des étages supérieurs raccordés en parallèle conformément à l'écoulement et traversés par différents premiers débits massiques partiels se distinguent de l'axe d'arbre de l'étage inférieur selon un angle différent de zéro.

5. Turbine à gaz (1) selon l'une des revendications précédentes, dans laquelle l'énergie mécanique est dégagée vers l'extérieur à partir d'un ou de plusieurs étages supérieurs, dans laquelle l'énergie est découplée de l'arbre d'un étage supérieur respectif soit directement sur un générateur, par le biais d'un arbre (511a) qui est relié à l'arbre de l'étage supérieur respectif, soit directement sur un engrenage, par le biais d'un arbre (512a) qui est relié à l'arbre de l'étage supérieur respectif.

6. Turbine à gaz (1) selon l'une des revendications précédentes, dans laquelle l'énergie mécanique est dégagée vers l'extérieur à partir d'un ou de plusieurs étages supérieurs, dans laquelle l'énergie est découplée, sous forme d'air comprimé à partir du compresseur haute pression (20a, 20b, 20c) respectif à l'aide d'une liaison fluidique directe, dans au moins un expanseur d'air (42) qui entraîne un générateur (52), dans laquelle l'entrée de l'au moins un expanseur d'air (42) se trouve en liaison fluidique directe avec la sortie des compresseurs haute pression (20a, 20b, 20c) et la sortie de l'au moins un expanseur d'air se trouve en liaison fluidique directe avec la sortie du compresseur basse pression (2) et l'entrée des compresseurs haute pression (20a, 20b, 20c).

7. Procédé d'utilisation d'une turbine à gaz (1), comprenant : comprimer un débit massique d'air total dans un compresseur basse pression (1), diviser le débit d'air total en débits massiques partiels en aval du compresseur basse pression, comprimer à nouveau au moins deux premiers débits massiques partiels respectivement dans un compresseur haute pression (20a, 20b, 20c), apporter de la chaleur vers les au moins deux premiers débits massiques partiels en aval du compresseur haute pression respectif, détendre les au moins deux premiers débits massiques partiels respectivement dans une turbine de détente haute pression (40a, 40b, 40c) après l'apport de chaleur, et apporter conjointement les au moins deux premiers débits massiques partiels dans une turbine de détente basse pression (4) commune en aval des turbines de détente haute pression et les détendre à nouveau, dans lequel le procédé comprend en outre : dériver en aval du compresseur basse pression au moins un deuxième débit massique partiel et apporter celui-ci à la turbine de détente basse pression par le biais d'au moins une conduite de dérivation, dans lequel le débit par le biais de l'au moins une conduite de dérivation (32a, 32b, 32c) est régulé à l'aide d'organes d'étranglement réglables (322a, 322b, 322c) qui sont commandés par un système de régulation.

8. Procédé d'utilisation d'une turbine à gaz (1) selon la revendication précédente, dans lequel l'énergie mécanique est dégagée à partir des étages supérieurs et dans lequel la turbine à gaz est une turbine à gaz selon la revendication 5, dans lequel l'énergie est découplée de l'arbre de l'étage supérieur respectif soit directement sur un générateur, par le biais d'un arbre (511a) qui est relié à l'arbre de l'étage supérieur respectif, soit directement sur un engrenage, par le biais d'un arbre (512a) qui est relié à l'arbre de l'étage supérieur respectif.

9. Procédé d'utilisation d'une turbine à gaz (1) selon la revendication précédente, dans lequel l'énergie mécanique est dégagée à partir des étages supérieurs et dans lequel la turbine à gaz est une turbine à gaz selon la revendication 6, dans lequel l'énergie est découplée, sous forme d'air comprimé à partir du compresseur haute pression (20a, 20b, 20c) respectif à l'aide d'une liaison fluidique directe, dans au moins un expanseur d'air (42) qui entraîne un générateur (52), dans lequel l'entrée de l'au moins un expanseur d'air (42) se trouve en liaison fluidique directe avec la sortie des compresseurs haute pression (20a, 20b, 20c) et la sortie de l'au moins un expanseur d'air se trouve en liaison fluidique directe avec la sortie du compresseur basse pression (2) et l'entrée des compresseurs haute pression (20a, 20b, 20c).

## FIG.1

# FIG.2

# FIG.3

200    300    400

20a (b, c ...)    30a (b, c ...)    40a (b, c ...)

300

FIG.4

350
351
352

354

353

FIG.5

322a  322b

A

A

20a/30a/40a

23

22　　　　35　　　　22

B

B

23

# FIG. 6

231  20a/30a/40a
322a
100

FIG.7

23

3220

322 a (1)

322 a (2)

3220

FIG.8

51a    511a    23

FIG.9

23

513a    512a

514a

# FIG.10

# FIG.11

FIG.12

EP 3 810 910 B1

**IN DER BESCHREIBUNG AUFGEFÜHRTE DOKUMENTE**

**In der Beschreibung aufgeführte Patentdokumente**

- US 2601194 A
- US 5743081 A